# EUROPÄISCHE PATENTSCHRIFT

(11) **EP 0 470 341 B1**
(45) Veröffentlichungstag und Bekanntmachung des Hinweises auf die Patenterteilung: **20.09.1995**
(21) Anmeldenummer: 91109315.1
(22) Anmeldetag: 06.06.1991
(51) Int. Cl.: H04L 12/56

(54) **Verfahren und Schaltungsanordnung für die Aufnahme und Weiterleitung von nach einem asynchronen Transfermodus übertragenen Nachrichtenzellen durch eine ATM-Vermittlungseinrichtung**
Method and switching device for receiving and transmitting information cells transmitted according to the asynchronous transfer mode through an ATM switching device
Méthode et agencement de commutation pour la réception et la transmission de cellules d'information transmises selon le mode de transfert asynchrone dans un dispositif de commutation ATM

(30) Priorität: 10.08.1990 EP 90115417
(43) Veröffentlichungstag der Anmeldung: 12.02.1992
(73) Patentinhaber: SIEMENS AKTIENGESELLSCHAFT, 80333 München (DE)
(72) Erfinder: Danner, Gerd, Dipl.-Phys., W-8000 München 21 (DE)

(56) Entgegenhaltungen:
- US-A- 4 932 020
- IBM TECHNICAL DISCLOSURE BULLETIN, Band 31, Nr. 2, Juli 1988, Seiten 465-466, Armonk, NY, US; "Packet structure for self-routing switching fabric"

## Beschreibung

Die Erfindung betrifft ein Verfahren und eine Schaltungsanordnung gemäß Oberbegriff des Patentanspruches 1 bzw. des Patentanspruches 3.

Ein derartiges Verfahren und eine derartige Schaltungsanordnung sind bereits für allgemeine ATM-Vermittlungseinrichtungen bekannt (US-PS 4 491 945). Bei Anwendung dieses bekannten Verfahrens in einer ATM-Vermittlungseinrichtung mit einer mehrstufigen Umkehr-Koppelanordnung kann der Fall auftreten, daß durch Hardware-Fehler bzw. Bitverfälschungen Nachrichtenzellen innerhalb der Umkehr-Koppelanordnung fehlgeleitet werden und somit anstatt die Umkehr-Koppelanordnung zu verlassen, wieder zu dieser zurückgeleitet werden. In einem solchen Falle besteht die Gefahr, daß Nachrichtenzellen ständig in einer Schleife in der Umkehr-Koppelanordnung verbleiben.

Es ist nun Aufgabe der vorliegenden Erfindung, einen Weg zu zeigen, wie bei einem Verfahren und einer Schaltungsanordnung der genannten Art ein Verbleiben von Nachrichtenzellen in einer Umkehr-Koppelanordnung verhindert werden kann.

Gelöst wird diese Aufgabe bei einem Verfahren gemäß Oberbegriff des Patentanspruches 1 durch die im kennzeichnenden Teil dieses Patentanspruches angegebenen Verfahrensmerkmale.

Die Erfindung bringt den Vorteil mit sich, daß durch das Beifügen einer Sicherungsinformation an jede der in einem Wegeinformationsblock enthaltenen Wegeinformationen und durch das gezielte Verfälschen einer solchen Sicherungsinformation bei der Verlagerung einer Wegeinformation an das Ende eines Wegeinformationsblockes mit einem geringen Steuerungsaufwand das Verbleiben einer Nachrichtenzelle in einer Umkehr-Koppelanordnung verhindert wird. Denn wenn eine Nachrichtenzelle nach einer Abarbeitung sämtlicher in dem zugehörigen Wegeinformationsblock enthaltener Wegeinformationen die Umkehr-Koppelanordnung fehlerhafterweise nicht verläßt, so wird dies anhand der verfälschten Sicherungsinformationen erkannt und daraufhin die betreffende Nachrichtenzelle innerhalb der Umkehr-Koppelanordnung nicht weitergeleitet.

Eine zweckmäßige Ausgestaltung des erfindungsgemäßen Verfahrens ergibt sich aus dem Patentanspruch 2. Der Vorteil dieser Ausgestaltung besteht darin, daß den einzelnen Wegeinformationen jeweils als Sicherungsinformation lediglich ein Paritätsbit angefügt ist, so daß die innerhalb der Umkehr-Koppelanordnung zu übertragenden Nachrichtenzellen gegenüber den ursprünglich in die ATM-Vermittlungseinrichtung aufgenommenen Nachrichtenzellen nur gering erweitert sind.

Die vorstehend aufgezeigte Aufgabe wird bei einer Schaltungsanordnung gemäß Oberbegriff des Patentanspruches 3 durch die im kennzeichnenden Teil dieses Patentanspruches angegebenen schaltungstechnischen Merkmale gelöst. Der Vorteil einer solchen Schaltungsanordnung besteht darin, daß fehlerhafterweise in einer Umkehr-Koppelanordnung verbleibende Nachrichtenzellen durch in den einzelnen Koppelstufen der Umkehr-Koppelanordnung vorhandene dezentrale Einrichtungen erkannt und vernichtet werden, so daß zentrale Einrichtungen der ATM-Vermittlungseinrichtung von einer derartigen Überwachung entlastet sind.

Die Erfindung wird nun anhand von Zeichnungen beispielsweise näher beschrieben.
FIG 1 zeigt eine ATM-Vermittlungseinrichtung, bei der die Erfindung angewandt ist,
FIG 2 zeigt einen möglichen Aufbau der in FIG 1 schematisch dargestellten Auswerteeinrichtungen.
FIG 3 zeigt einen möglichen Aufbau der in FIG 1 schematisch dargestellten Behandlungseinrichtungen und
FIG 4 zeigt einen möglichen Aufbau der in FIG 2 schematisch dargestellten Einrichtung für die Verlagerung von Bitgruppen.

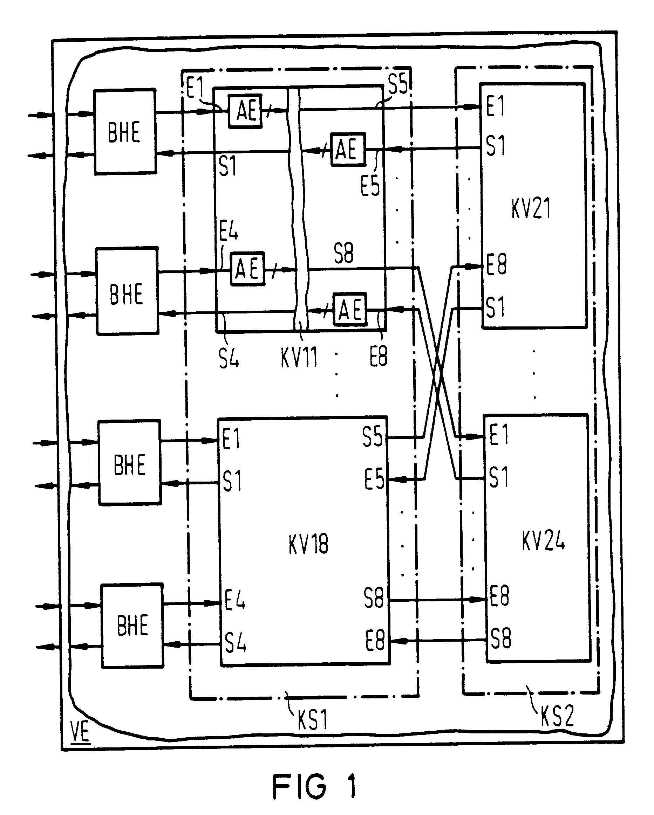

Die in FIG 1 ausschnittweise dargestellte ATM-Vermittlungseinrichtung VE weist eine Mehrzahl von Behandlungseinrichtungen BHE auf, an welche jeweils zwei externe Übertragungsleitungen, nämliche eine Eingangs-Übertragungsleitung und eine dieser zugeordnete Ausgangs-Übertragungsleitung, angeschlossen sind. Innerhalb der ATM-Vermittlungseinrichtung stehen die Behandlungseinrichtungen BHE über den jeweils zugehörigen externen Übertragungsleitungen zugeordnete Verbindungsleitungen mit einer ersten Koppelstufe KS1 einer lediglich als Beispiel zweistufig ausgebildeten Umkehr-Koppelanordnungen in Verbindung. Diese erste Koppelstufe KS1 ist als Beispiel aus 8 Koppelvielfachen KV11 bis KV18 gebildet. Von diesen sind in FIG 1 lediglich die Koppelvielfache KV11 und KV18 dargestellt. Jedes der Koppelvielfache verfügt über 8 mit E1 bis E8 bezeichnete Eingänge sowie 8 mit S1 bis S8 bezeichnete Ausgänge. Gleiche Ziffern führende Eingänge und Ausgänge sind dabei einander zugeordnet. An die einander zugeordneten Eingänge und Ausgänge E1/S1 bis E4/S4 sind die zuvor genannten Behandlungseinrichtungen BHE angeschlossen. Die übrigen einander zugeordneten Eingänge und Ausgänge E5/S5 bis E8/S8 der einzelnen Koppelvielfache stehen dagegen über Verbindungsleitungen mit 4 eine zweite Koppelstufe KS2 bildenden Koppelvielfachen KV21 bis KV24 in Verbindung. Von diesen sind in FIG 1 lediglich die Koppelvielfache KV21 und KV24 dargestellt.

Jedes dieser Koppelvielfache KV21 bis KV24 weist wie die Koppelvielfache der ersten Koppelstufe KS1 8 Eingänge E1 bis E8 und 8 diesen zugeordnete Ausgänge S1 bis S8 auf. Entsprechend dem angewandten Umkehrprinzip existieren dabei für jede Verbindung zwischen einem Koppelvielfachen der ersten Koppelstufe KS1 und einem Koppelvielfachen der zweiten Koppelstufe KS2 zwei einander zugeordnete, für entgegengesetzte Übertragungsrichtungen vorgesehene Verbindungsleitungen. Gemäß FIG 1 ist also beispielsweise der zwischen dem Ausgang S5 des Koppelvielfaches KV11 und dem Eingang E1 des Koppelvielfaches KV21 liegenden Verbindungsleitung eine Verbindungsleitung zugeordnet, die zwischen dem Ausgang S1 des Koppelvielfaches KV21 und dem Eingang E5 des Koppelvielfaches KV11 liegt.

Wie für das Koppelvielfach KV11 angedeutet, ist jeder der Eingangsleitungen E1 bis E8 der in FIG 1 dargestellten Koppelvielfache eine gesonderte Auswerteeinrichtung AE zugeordnet, auf deren Funktion im folgenden noch näher eingegangen wird.

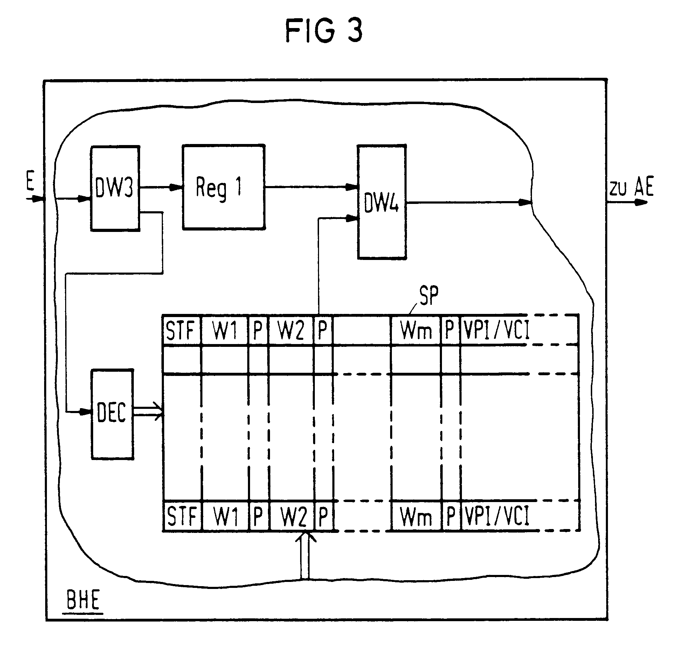

Die gerade erläuterte ATM-Vermittlungseinrichtung VE dient für die Aufnahme und Weiterleitung von nach einem asynchronen Transfermodus ("asynchronous transfer mode") übertragener Nachrichtenzellen mit fester Zellenlänge, die jeweils neben einer Mehrzahl von zu übertragenden Nachrichtensignalbits einen sogenannten Zellenkopf aufweisen. Bei dem hier innerhalb der ATM-Vermittlungseinrichtung angewandten sogenannten Self-Routing-Prinzip werden bei der Aufnahme von Nachrichtenzellen über die zuvor erwähnten externen Übertragungsleitungen in den jeweiligen Zellenkopf für jede der zu durchlaufenden Koppelstufen eine Wegeinformation eingetragen, und zwar in der Reihenfolge des vorgesehenen Durchlaufs. Dieses Eintragen erfolgt mit Hilfe der zuvor erwähnten, in FIG 3 detaillierter dargestellten Behandlungseinrichtungen BHE. Dabei wird den Wegeinformationen jeweils eine gesonderte Sicherungsinformation beispielsweise in Form eines Paritätsbits beigefügt. Auf diese Weise hinsichtlich der Wegeinformationen gesicherte Nachrichtenzellen werden dann der mit der jeweiligen Behandlungseinrichtung BHE verbundenen Auswerteeinrichtung AE zugeführt. Hier wird zunächst die in dem jeweiligen Zellenkopf enthaltene erste Wegeinformation anhand der zugehörigen Sicherungsinformation (Paritätsbit) einer Überprüfung auf Fehlerfreiheit unterzogen. Bei vorliegen einer Fehlerfreiheit wird dann die jeweilige Nachrichtenzelle nach Maßgabe der gerade überprüften Wegeinformation über das in Frage kommende Koppelvielfach zu der Koppelstufe KS2 hin weitergeleitet. Dabei wird bei diesem Weiterleiten die gerade verwendete Wegeinformation an das Ende des Wegeinformationsblockes innerhalb des Zellenkopfes verlagert, wobei gleichzeitig eine Verfälschung der zugehörigen Sicherungsinformation erfolgt. Bei der als Beispiel angegebenen Verwendung eines Paritätsbits als Sicherungsinformation wird also dieses Paritätsbit invertiert.

Wird dagegen bei der gerade erwähnten Überprüfung eine fehlerhafte Wegeinformation erkannt, so wird die jeweilige Nachrichtenzelle nicht weitergeleitet, d. h. diese Nachrichtenzelle wird vernichtet.

Die gerade erläuterte Auswertung von Nachrichtenzellen wiederholt sich in jeder Auswerteeinrichtung AE der im Zuge der jeweiligen virtuellen Verbindung durchlaufenen Koppelvielfache, so daß im Normalfall, d. h. bei Fehlerfreiheit der einzelnen Wegeinformationen innerhalb einer Nachrichtenzelle, die einzelnen Nachrichtenzellen über oben erwähnte externe Übertragungsleitungen an Nachfolgeeinrichtungen der ATM-Vermittlungseinrichtung weitergeleitet werden. Es kann jedoch auch der Fall eintreten, daß beispielsweise eine Nachrichtenzelle innerhalb der Umkehr-Koppelanordnung bei Auftreten eines durch Bitverfälschungen verursachten Doppelfehlers in einer der Wegeinformationen fehlgeleitet wird und nach der Abarbeitung sämtlicher ursprünglich in den zugehörigen Zellenkopf eingetragener Wegeinformationen in der Umkehr-Koppelanordnung verbleibt. In diesem Falle steht dann in einer der Auswerteeinrichtungen AE eine Auswertung einer Wegeinformation an, deren zugehörige Sicherungsinformation (Paritätsbit) zuvor gezielt verfälscht worden ist. Eine Auswertung dieser beiden Informationen führt demzufolge dazu, daß die betreffende Auswerteeinrichtung einen Fehler in der betreffenden Wegeinformation erkennt und somit die für eine Weiterleitung anstehende Nachrichtenzelle in der oben angegebenen Weise vernichtet. Auf diese Weise wird verhindert, daß Nachrichtenzellen durch Übertragungsfehler innerhalb der Umkehr-Koppelanordnung ständig in einer Schleife umlaufen bzw. fehlgeleitet werden.

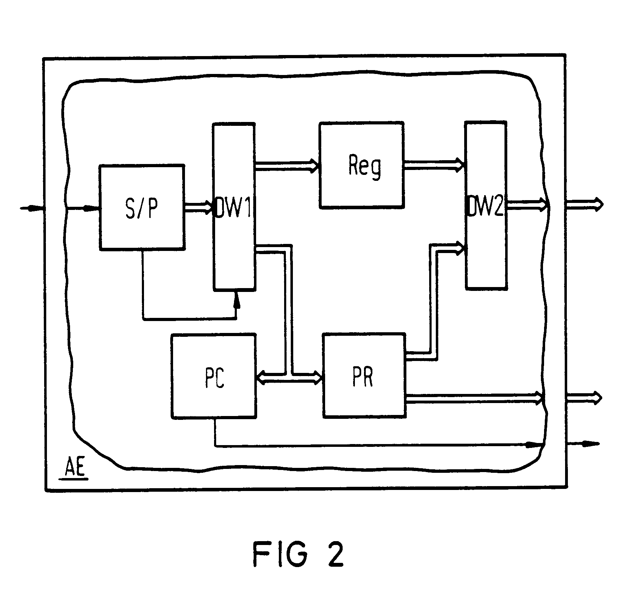

Im folgenden wird anhand der FIG 2 ein möglicher Aufbau der zuvor erwähnten Auswerteeinrichtungen AE beschrieben. Gemäß FIG 2 weist eine solche Auswerteeinrichtung eingangsseitig einen Serien-Parallel-Wandler S/P auf, der einerseits ihm in serieller Form zugeführte Nachrichtenzellen in Bitgruppen mit jeweils einer festgelegten Anzahl von Bits unterteilt und die einzelnen Bitgruppen anschließend in paralleler Form an eine Datenweiche DW1 weiterleitet. Die Anzahl der in einer solchen Bitgruppe enthaltenen Bits möge dabei der Anzahl der Bits einer Wegeinformation einschließlich des zugehörigen Paritätsbits entsprechen.

Andererseits überwacht dieser Serien-Parallel-Wandler ständig das Auftreten von Zellenköpfen. Dies kann beispielsweise mit Hilfe eines Vergleichers erfolgen, der die in paralleler Form vorliegenden Bitgruppe zugeführt erhält und dabei das Vorliegen einer den Beginn eines Zellenkopfes anzeigenden Bitgruppe (start flag) anzeigt. Liegt eine solche vor, so wird die Datenweiche DW1 durch ein von dem Serien-Parallel-Wandler abgegebenes Steuersignal derart gesteuert, daß die zu dem betreffenden Zellenkopf gehörenden Bitgruppen über die Datenweiche einer in bekannter Weise aufgebauten Paritätsprüfeinrichtung PC sowie einer Einrichtung zur Verlagerung von Bitgruppen PR zugeführt sind. Die dem betreffenden Zellenkopf nachfolgenden Bitgruppen werden dagegen nach einer Umsteuerung der Datenweiche DW1 einem Register Reg zugeführt und dort zunächst zwischengespeichert.

Die Paritätsprüfeinrichtung PC überprüft die erste empfangene Wegeinformation anhand der beigefügten Sicherungsinformation (Paritätsbit) auf Fehlerfreiheit. Das Prüfergebnis wird dabei an einem Prüfausgang angezeigt. Gleichzeitig stellt die Einrichtung PR die gerade von der Paritätsprüfeinrichtung überprüfte Wegeinformation an ersten Ausgängen bereit. Nach Maßgabe dieser Wegeinformation wird die gerade die Auswerteeinrichtung AE durchlaufende Nachrichtenzelle in einen der den Ausgangsleitungen des zugehörigen Koppelvielfachs zugeordneten Warteschlangenspeicher für eine nachfolgende Weiterleitung aufgenommen, falls durch die Paritätsprüfeinrichtung PC eine fehlerfreie Wegeinformation angezeigt ist. Da die Steuerung derartiger Warteschlangenspeicher und die anschließende Weiterleitung der in diesen gespeicherten Nachrichtenzellen nicht Gegenstand vorliegender Erfindung ist, wird hier darauf nicht näher eingegangen.

Für die gerade erwähnte Aufnahme der die Auswerteeinrichtung AE durchlaufenden Nachrichtenzellen in einen der Warteschlangenspeicher des Koppelvielfaches wird der der Einrichtung PR gerade zugeführte Zellenkopf von dieser derart modifiziert, daß die bisher an erster Stelle auftretende Wegeinformation an das Ende des Wegeinformationsblockes verlagert wird. Damit wird gleichzeitig die dieser Wegeinformation zugehörige Sicherungsinformation verfälscht, d. h. das als Sicherungsinformation dienende Paritätsbit wird invertiert. Dieser modifizierte, für die Weiterleitung der Nachrichtenzelle aktuelle Zellenkopf wird dann über zweite Ausgänge der Einrichtung PR ersten Eingängen einer Datenweiche DW2 zugeführt, die diesen Zellenkopf für die zuvor erwähnte Zwischenspeicherung weiterleitet. Über zweite Eingänge dieser Datenweiche werden anschließend die zuvor in das Register Reg aufgenommenen Bitgruppen der Nachrichtenzelle an den Zellenkopf angefügt. Die Verweildauer der einzelnen Bitgruppen innerhalb des Registers ist dabei so festgelegt, daß die mit einem modifizierten Zellenkopf versehene Nachrichtenzelle lückenlos in der angegebenen Weise zwischengespeichert werden kann.

Wie zuvor erwähnt, erfolgt eine Zwischenspeicherung einer Nachrichtenzelle in einem der Warteschlangenspeicher lediglich dann, wenn zuvor die dafür erforderliche Wegeinformation von der Paritätsprüfeinrichtung PC als fehlerfrei erkannt worden ist. Ermittelt dagegen diese Paritätsprüfeinrichtung eine fehlerbehaftete Wegeinformation, so unterbleibt eine Zwischenspeicherung und anschließende Weiterleitung der zugehörigen Nachrichtenzelle.

In FIG 3 ist ein möglicher Aufbau der zuvor erwähnten Behandlungseinrichtungen BHE dargestellt. Dabei sind lediglich diejenigen Schaltungsteile angegeben, die für das Verständnis der vorliegenden Erfindung erforderlich sind.

Mit der jeweiligen Eingangs-Übertragungsleitung, die in FIG 3 mit E bezeichnet ist, ist über eine Datenweiche DW3 ein Register Reg1 verbunden. In dieses Register werden die Nachrichtensignalbits einer über die Eingangs-Übertragungsleitung übertragenen Nachrichtenzelle aufgenommen. Der der jeweiligen Nachrichtenzelle zugehörige Zellenkopf wird dagegen über die Datenweiche DW3 einem Adressendecodierer DEC zugeführt. Eine entsprechende Steuerung der Datenweiche kann dabei beispielsweise durch eine dieser Datenweiche vorgeschaltete Vergleicheranordnung erfolgen, die das Auftreten einer den Beginn eines Zellenkopfes anzeigenden Bitkombination (start flag) überwacht.

Der Adressendecodierer DEC decodiert die in einem Zellenkopf in Form einer virtuellen Kanalnummer VCI enthaltenen, die jeweilige virtuelle Verbindung bezeichnenden Angaben und stellt entsprechende Ausgangssignale bereit. Diese sind einem Speicher SP als Adressensignale zugeführt. Der Speicher weist für jede der auf der zugehörigen Eingangs-Übertragungsleitung möglichen virtuellen Verbindungen eine gesonderte Speicherzelle auf. Diese Speicherzellen sind nach Maßgabe der von dem Adressendecodierer DEC decodierten virtuellen Kanalnummern VCI ansteuerbar. In jeder dieser Speicherzellen ist bei einer eingerichteten virtuellen Verbindung, wie in FIG 3 schematisch dargestellt ist, ein beispielsweise nach der CCITT-Empfehlung I.361 festgelegter Zellenkopf gespeichert, der unter anderem ein den Beginn eines Zellenkopfes anzeigendes Bitmuster STF (start flag), eine der Anzahl der in der ATM-Vermittlungseinrichtung zu durchlaufenden Koppelstufen entsprechende Anzahl von Wegeinformationen sowie eine für die jeweilige virtuelle Verbindung auf der in Frage kommenden Ausgangs-Übertragungsleitung der ATM-Vermittlungseinrichtung (FIG 1) festgelegte virtuelle Kanalnummer VCI enthält. Ein solcher neuer Zellenkopf ("self routing haeder") wird, wie im folgenden noch erläutert werden wird, den gerade in das Register Reg1 aufgenommenen Nachrichtensignalbits einer Nachrichtenzelle für deren Weiterleitung vorangestellt. Die genannten Wegeinformationen sind in FIG 3 mit W1 bis Wm bezeichnet, wobei die Ziffern 1, ..., m jeweils die zu durchlaufende Koppelstufe der ATM-Vermittlungseinrichtung angeben. Jeder dieser Wegeinformationen ist dabei eine Sicherungsinformation in Form eines Paritätsbits P beigefügt.

Die gerade erwähnten, in dem Speicher SP gespeicherten Angaben werden im übrigen von einer nicht dargestellten Steuereinrichtung her im Zuge des Aufbaus der jeweiligen virtuellen Verbindung in die in Frage kommende Speicherzelle eingetragen.

Bei einer zuvor erwähnten Ansteuerung einer Speicherzelle des Speichers SP durch den Adressendecodierer DEC wird der in dieser Speicherzelle gespeicherte Zellenkopf ausgelesen und einem ersten Eingang einer Datenweiche DW4 zugeführt. An einem zweiten Eingang dieser Datenweiche ist der Ausgang des zuvor erwähnten Registers Reg1 angeschlossen. Diese Datenweiche wird beispielsweise von einem nicht dargestellten Zähler derart angesteuert, daß zunächst ein aus dem Speicher SP ausgelesener Zellenkopf und anschließend die in dem Register Reg1 gespeicherten Nachrichtensignalbits seriell am Ausgang der in FIG 3 dargestellten Behandlungseinrichtung BHE auftreten.

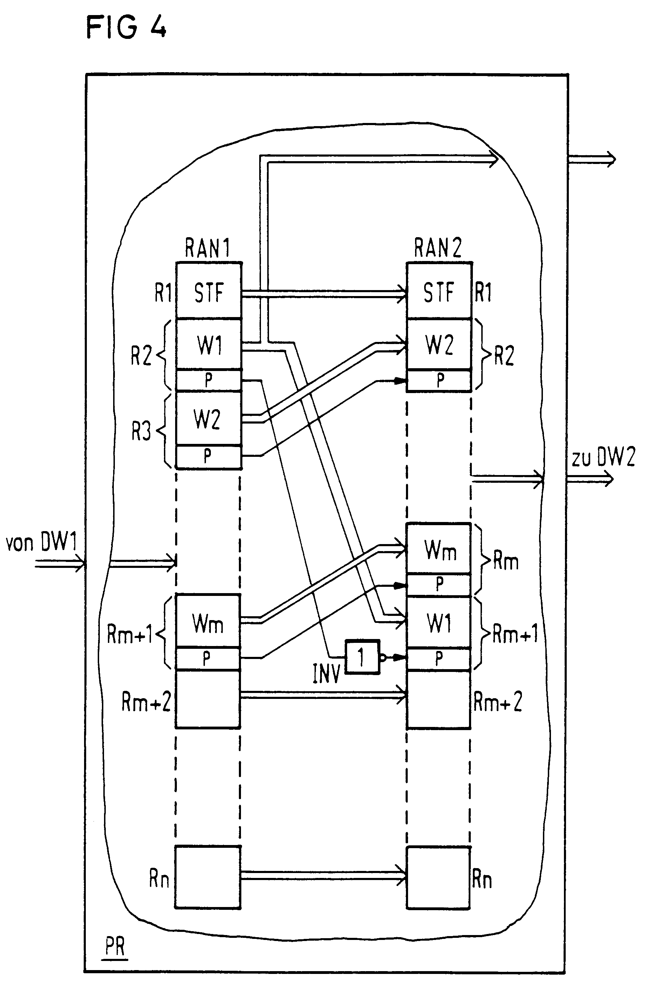

In FIG 4 ist ein möglicher Aufbau der zuvor bereits anhand der FIG 2 erläuterten Einrichtung PR für die Verlagerung von Bitgruppen dargestellt. Danach weist diese Einrichtung eine erste Registeranordnung RAN1 auf, welche eine der Anzahl der in einem Zellenkopf enthaltenen Bitgruppen entsprechende Anzahl von Registerzellen R1 bis Rn aufweist. Diese Registerzellen sind beispielsweise durch eine Zähleranordnung derart steuerbar, daß in diese nacheinander die zu einem Zellenkopf gehörenden, über die Datenweiche DW1 (FIG 2) übertragenen Bitgruppen einschreibbar sind. Jede dieser Bitgruppen entspricht dabei einer der in einer Speicherzelle des in FIG 3 dargestellten Speichers SP eingetragenen Angaben. Die erste Bitgruppe stellt also die den Beginn eines Zellenkopfs anzeigende Bitgruppe STF dar. Die dieser nachfolgenden Bitgruppen enthalten dagegen jeweils eine der Wegeinformationen W1 bis Wm einschließlich der diesen jeweils beigefügten Sicherungsinformation P (Paritätsbit).

Es sei nun als Beispiel angenommen, daß in den aufeinanderfolgenden Bitgruppen des der Registeranordnung RAN1 zugeführten Zellenkopfes Informationen in der Reihenfolge STF, (W1 + P), ..., (Wm + P), ... enthalten sind. Dies ist beispielsweise der Fall für eine Auswerteeinrichtung AE, die unmittelbar einer der Behandlungseinrichtungen BHE folgt. Entsprechend dieser Reihenfolge werden die einzelnen Bitgruppen, wie in FIG 4 angegeben, nacheinander in die einzelnen Registerzellen R1 bis Rn eingetragen.

Der Registeranordnung RAN 1 ist eine dieser entsprechende Registeranordnung RAN2 mit Registerzellen R1 bis Rn nachgeschaltet. Die beiden Registeranordnungen sind dabei so miteinander verbunden, daß die Inhalte der Registerzellen R1 und Rm + 2 bis Rn der Registeranordnung RAN1 in die Registerzellen R1 und Rm + 2 bis Rn der Registeranordnung RAN2 übertragbar sind. Die übrigen Registerzellen R2 bis Rm + 1 der beiden Registeranordnungen sind dagegen so miteinander gekoppelt, daß die Inhalte der Registerzellen R3 bis Rm + 1 der Registeranordnung RAN1 in die Registerzellen R2 bis Rm der Registeranordnung RAN2 eintragbar sind. Dagegen wird der Inhalt der Registerzelle R2 der Registeranordnung RAN1 in die Registerzelle Rm + 1 der Registeranordnung RAN2 übernommen, wobei vor dieser Übernahme das der jeweiligen Wegeinformation, hier der Wegeinformation W1, beigefügte Paritätsbit P mit Hilfe eines Inverters INV invertiert wird. Damit steht dann in der Registeranordnung RAN2 ein modifizierter Zellenkopf zur Verfügung, in welchem die ursprünglich an erster Stelle der Wegeinformationen stehende Wegeinformation, hier W1, einschließlich des zugehörigen Paritätsbits an das Ende des Wegeinformationsblockes unter gleichzeitiger Invertierung des Paritätsbits verlagert ist. Dieser modifizierte Zellenkopf wird dann in der oben angegebenen Weise an die Datenweiche DW2 (FIG 2) weitergeleitet.

Die in der Registerzelle R2 der Registeranordnung RAN1 gespeicherte Wegeinformation, d. h. im vorliegenden Fall die Wegeinformation W1, wird darüber hinaus gesondert bereitgestellt, um in der oben angegebenen Weise eine in die jeweilige Auswerteeinrichtung (FIG 2) gerade aufgenommene Nachrichtenzelle mit einem modifizierten Zellenkopf weiterleiten zu können.

Abschließend sei noch darauf hingewiesen, daß die zuvor erwähnte Paritätsprüfeinrichtung PC (FIG 2) für eine Auswertung der ersten in einem Zellenkopf auftretenden Wegeinformation von der Einrichtung PR (FIG 4) aktiviert werden kann, indem diese mit der Ansteuerung der Registerzelle R2 der Registeranordnung RAN1 für die Übernahme einer Wegeinformation ein entsprechendes Steuersignal an die Paritätsprüfeinrichtung abgibt.

## Patentansprüche

1. Verfahren für die Aufnahme und Weiterleitung von nach einem asynchronen Transfermodus übertragenen Nachrichtenzellen durch eine eine mehrstufige Umkehr-Koppelanordnung (KS1, KS2) aufweisende ATM-Vermittlungseinrichtung (VE), wobei jeder der Nachrichtenzellen innerhalb der ATM-Vermittlungseinrichtung ein Wegeeinformationsblock mit einer der Anzahl der zu durchlaufenden Koppelstufen entsprechenden Anzahl von Wegeinformationen vorangestellt wird und die für die Weiterleitung einer Nachrichtenzelle durch eine der Koppelstufen gerade ausgewertete Wegeinformation anschließend an das Ende des jeweiligen Wegeinformationsblockes verlagert wird,
**dadurch gekennzeichnet,**
daß jeder der Wegeinformationen eines Wegeinformationsblockes eine gesonderte Sicherungsinformation beigefügt wird, daß mit der Verlagerung einer Wegeinformation an das Ende des jeweiligen Wegeinformationsblockes die zugehörige Sicherungsinformation verfälscht wird
und daß eine Nachrichtenzelle über eine Koppelstufe lediglich dann weitergeleitet wird, wenn die dafür auszuwertende Wegeinformation anhand der beigefügten Sicherungsinformation als fehlerfrei erkannt wird.

2. Verfahren nach Anspruch 1,
**dadurch gekennzeichnet,**
daß den Wegeinformationen jeweils als Sicherungsinformation ein Paritätsbit beigefügt wird
und daß mit der Verlagerung einer Wegeinformation an das Ende des jeweiligen Wegeinformationsblockes das zugehörige Paritätsbit invertiert wird.

3. Schaltungsanordnung für die Aufnahme und Weiterleitung von nach einem asynchronen Transfermodus übertragenen Nachrichtenzellen durch eine eine mehrstufige Umkehr-Koppelanordnung (KS1, KS2) aufweisende ATM-Vermittlungseinrichtung (VE), wobei jeder der über Eingangsleitungen der ATM-Vermittlungseinrichtung aufgenommenen Nachrichtenzellen durch eine der jeweiligen Eingangsleitung zugeordnete Behandlungseinrichtung (BHE) ein Wegeinformationsblock mit einer der Anzahl der zu durchlaufenden Koppelstufen entsprechenden Anzahl von Wegeinformationen vorangestellt ist und wobei Eingangsleitungen einer Koppelstufe jeweils eine Auswerteeinrichtung (AE) zugeordnet ist, welche die für die Weiterleitung einer Nachrichtenzelle über die jeweilige Koppelstufe gerade ausgewertete Wegeinformation anschließend an das Ende des jeweiligen Wegeinformationsblockes verlagert,
**dadurch gekennzeichnet**,
daß die Behandlungseinrichtungen (BHE) und die Auswerteeinrichtungen (AE) jeweils derart ausgebildet sind,
daß die Behandlungseinrichtungen (BHE) jeweils jeder der Wegeinformationen eines Wegeinformationsblockes eine gesonderte Sicherungsinformation beifügen,
daß die Auswerteeinrichtungen (AE) jeweils mit der Verlagerung einer Wegeinformation an das Ende eines Wegeinformationsblockes die zugehörige Sicherungsinformation verfälschen
und daß die Auswerteeinrichtungen (AE) jeweils eine Nachrichtenzelle über die zugehörige Koppelstufe (KS1, KS2) lediglich dann weiterleiten, wenn die dafür auszuwertende Wegeinformation anhand der beigefügten Sicherungsinformation als fehlerfrei erkannt ist.

## Claims

1. Method for receiving and forwarding information cells transmitted according to an asynchronous transfer mode by an ATM switching device (VE) having a multi-stage revertive switching device (KS1, KS2), in which each of the information cells within the ATM switching device is preceded by a routing information block having a number of routing information items corresponding to the number of switching matrix stages to be passed through and the routing information just evaluated for the forwarding of an information cell via one of the switching matrix stages is subsequently displaced to the end of the respective routing information block, characterized in that a separate protection information item is appended to each of the routing information items of a routing information block, in that the associated protection information is falsified when a routing information item is displaced to the end of the respective routing information block, and in that an information cell is forwarded via a switching matrix stage only if the routing information to be evaluated for this purpose is identified as error-free on the basis of the appended protection information.

2. Method according to Claim 1, characterized in that a parity bit is appended to the routing information as protection information in each case, and in that the associated parity bit is inverted when a routing information item is displaced to the end of the respective routing information block.

3. Circuit arrangement for receiving and forwarding information cells transmitted according to an asynchronous transfer mode by an ATM switching device (VE) having a multi-stage revertive switching device (KS1, KS2), in which, by means of a handling device (BHE) assigned to the respective input line, each of the information cells received via input lines of the ATM switching device is preceded by a routing information block having a number of routing information items corresponding to the number of switching matrix stages to be passed through, and in which there is assigned to input lines of a switching matrix stage an evaluation device (AE) in each case which subsequently displaces the routing information just evaluated for the forwarding of an information cell via the respective switching matrix stage to the end of the respective routing information block, characterized in that the handling devices (BHE) and the evaluation devices (AE) are in each case designed in such a way that the handling devices (BHE) append a separate protection information item to each of the routing information items of a routing information block in each case, that the evaluation devices (AE) falsify the associated protection information when a routing information item is displaced to the end of a routing information block in each case, and in that the evaluation devices (AE) in each case only forward an information cell via the associated switching matrix stage (KS1, KS2) if the routing information to be evaluated for this purpose is identified as error-free on the basis of the appended protection information.

## Revendications

1. Procédé pour la réception et la retransmission de cellules d'information, transmises selon un mode de transfert asynchrone, par un dispositif de commutation ATM (VE), possédant un dispositif de couplage à rebroussement (KS1, KS2) à plusieurs étages, selon lequel, à l'intérieur du dispositif de commutation ATM, un bloc d'informations d'acheminement comportant un nombre d'informations d'acheminement, qui correspond au nombre des étages de couplage devant être traversés, est inséré en avant de chacune des cellules d'information et l'information d'acheminement, qui est précisément évaluée par l'un des étages de couplage pour la retransmission d'une cellule d'information, est ensuite décalée à la fin du bloc respectif d'informations d'acheminement, caractérisé par le fait
qu'une information particulière de sécurité est adjointe à chacune des informations d'acheminement d'un bloc d'informations d'acheminement, que l'information associée de sécurité est faussée avec le décalage d'une information d'acheminement à l'extrémité du bloc respectif d'informations d'acheminement, et
qu'une cellule d'information est retransmise par l'intermédiaire d'un étage de couplage uniquement lorsque l'information d'acheminement, devant être évaluée à cet effet, est identifiée comme étant sans erreur sur la base de l'information de sécurité adjointe.

2. Procédé suivant la revendication 1, caractérisé par le fait
qu'un bit de parité est adjoint respectivement, en tant qu'information de sécurité, aux informations d'acheminement, et
que le bit de parité associé est inversé avec le décalage d'une information d'acheminement à la fin du bloc respectif d'informations d'acheminement.

3. Montage pour la réception et la retransmission de cellules d'informations transmises selon un mode de transfert asynchrone au moyen d'un dispositif de commutation ATM (VE) possédant un étage de couplage à rebroussement (KS1, KS2) à plusieurs étages, et dans lequel un bloc d'informations d'acheminement, possédant un nombre d'informations d'acheminement qui correspond au nombre des étages de couplage devant être inversés, est inséré en avant de chacune des cellules d'informations, qui sont reçues par l'intermédiaire des lignes d'entrée du dispositif de commutation ATM, au moyen d'un dispositif de traitement (BHE) associé à la ligne respective d'entrée, et dans lequel à des lignes d'entrée d'un étage de couplage est associé respectivement un dispositif d'évaluation (AE), qui décale ensuite l'information d'acheminement précisément évaluée pour la retransmission d'une cellule d'informations par l'intermédiaire de l'étage de couplage respectif, à la fin du bloc respectif d'informations d'acheminement, caractérisé par le fait
que les dispositifs de traitement (BHE) et les dispositifs d'évaluation (AE) sont agencés respectivement de telle sorte
que les dispositifs de traitement (BHE) adjoignent une formation particulière de sécurité respectivement à chacune des informations d'acheminement d'un bloc d'informations d'acheminement,
que les dispositifs d'évaluation (AE) faussent l'information associée de sécurité, respectivement lors du décalage d'une information d'acheminement à la fin d'un bloc d'informations d'acheminement, et
que les dispositifs d'évaluation (AE) retransmettent respectivement une cellule d'informations par l'intermédiaire de l'étage de couplage associé (KS1,KS2), uniquement lorsque l'information d'acheminement, devant être évaluée à cet effet, est reconnue comme étant exempte d'erreurs, sur la base de l'information de sécurité adjointe.
